# EUROPÄISCHE PATENTANMELDUNG

(11) **EP 1 103 211 A1**
(43) Veröffentlichungstag der Anmeldung: **30.05.2001**
(21) Anmeldenummer: 00204069.9
(22) Anmeldetag: 16.11.2000
(51) Int. Cl.: A47J 43/10

(54) **Küchenwerkzeug zum Rühren, Schlagen und Loslösen**

(30) Priorität: 29.11.1999 IT BZ990054
(71) Anmelder: Skudelny, Kai, 39018 Terlano (BZ) (IT)
(72) Erfinder: Skudelny, Kai, 39018 Terlano (BZ) (IT)
(74) Vertreter: Faraggiana, Vittorio, Dr. Ing.

(57) **Zusammenfassung**

Beschrieben wird ein Küchenwerkzeug zum Rühren, Schlagen und Loslösen, umfassend einen Stiel und ein mit dem Griff verbundenes Arbeitsorgan.

Gemäß der Erfindung ist das Arbeitsorgan durch eine Vielzahl von Flügeln (5) gebildet, die sich radial von einer mittigen Nabe (6) erstrecken, die auf lösbare Art und Weise mit dem Verbindungsende des Stieles (3) verbunden ist.

## Beschreibung

Küchenwerkzeug zum Rühren, Schlagen und Loslösen, gemäß dem Oberbegriff des Anspruchs 1.

Die sogenannten Schneebesen dienen dazu, die Massen in einem Topf zu schlagen, um deren Konsistenz und Gemisch auf eine Endstufe zum Verbrauch oder einer Zwischenstufe für eine weitere Bearbeitung zu bringen. Das Werkzeug besteht in diesem Fall aus einem verzinnten Eisendraht um das Gemisch peitschenartig zu schlagen. Die Ausbildung der bekannten Schneebesen weist das Problem auf, dass die Gemische an der Innenwand des Topfes kleben bleiben und nur mit Schwierigkeit lässt sich die Masse von der Wand selbst loslösen, da das Werkzeug selbst nicht in der Lage ist, bis zu den Massenteilchen auf der Wand zu kommen.

Überdies ist das Problem bekannt, nur mit Schwierigkeiten die Gefäße, insbesondere Töpfe, reinigen zu können, da geeignete Reinigungsvorrichtungen fehlen.

Die Aufgabe der vorliegenden Erfindung liegt darin, die Nachteile der Küchenwerkzeuge der oben beschriebenen Art zu beseitigen, indem die Ausführung eines vielseitigen Werkzeuges vorgeschlagen wird, das fähig ist, das zuzubereitende Produkt zu rühren, schlagen und loszulösen. Eine weitere Aufgabe liegt darin, das Werkzeug selbst den verschiedenen Situationen von Küchengefäßen sowohl wegen ihrer verschiedenen Ausbildung als auch zum Loslösen von verschiedenen Massen von den Wänden derselben anpassen zu können.

Diese und weitere Aufgaben werden gemäß der Erfindung durch ein Küchenwerkzeug zum Rühren, Schlagen und Loslösen mit den Merkmalen des Anspruchs 1 gelöst.

Durch Bereitstellung einer Vielzahl von Flügeln, die sich von einem mittigen, nabenartigen Körper erstrecken, können die Flügel auch Übergänge mit kleinem Radius erreichen und gleichzeitig mit Biegsamkeit auf die an der Innenwand des Gefäßes haftenden Masse einwirken.

Werden Flügel mit abgerundeten Enden vorgeschlagen, können sich diese den Übergängen zwischen der Bodenwand eines Gefäßes und der aufstehenden Wand anpassen.

Wird eine lösbare Verbindung zwischen dem Ende des Stieles und der Nabe des Arbeitsorgans ausgeführt, kann das Arbeitsorgan rasch ausgetauscht werden, um ein für eine andere Gefäßart geeignetes Arbeitsorgan auszuwählen. Es ist klar, dass anstatt des Austausches des Arbeitsorgans auch möglich wäre, den Stiel mit einer anderen Exzentrizität des Handgriffes auszutauschen, um mit größerer Wirksamkeit auf den Stiel selbst wirken zu können.

Werden für den Stiel Leisten vorgesehen, die ausgehend von einer Stielkrümmung in Richtung des freien Endes des Stiels zur Bildung einer Auflagefläche auseinanderlaufen, so kann das Küchenwerkzeug mit angehobenem Arbeitsorgan auf der Arbeitsebene in der Nähe der Kochfläche bequem liegengelassen bleiben, ohne die Arbeitsebene zu verschmutzen.

Weitere Merkmale und Einzelheiten des Küchenwerkzeuges zum Rühren, Schlagen und Loslösen gehen aus der folgenden Beschreibung einer bevorzugten, in der beigefügten Zeichnung dargestellten Ausführungsform hervor. Es zeigen,
- Figur 1: schematisch die Skizzen eines Küchenwerkzeugs in einem ebenfalls schematisch dargestellten Topfes,
- Figur 2: ein Arbeitsorgan in einem schematischen Schaubild,

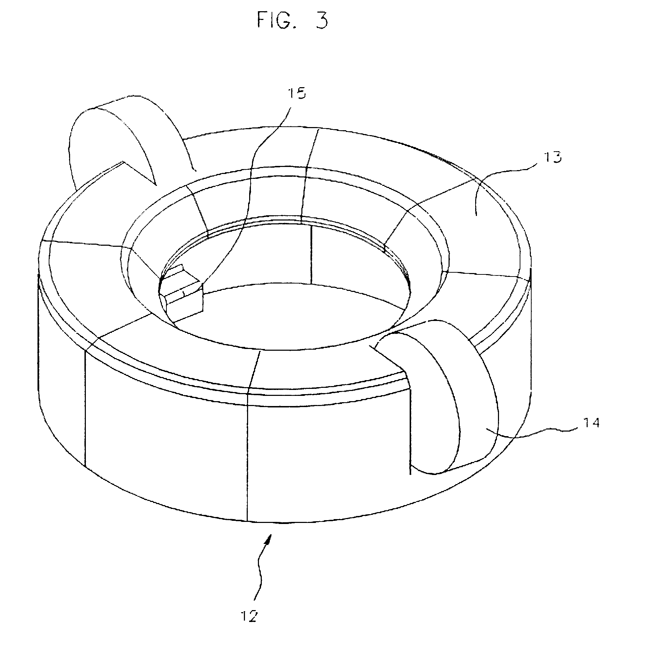

- Figur 3: eine bajonettartige Überwurfmutter in einem schematischen Schaubild,
- Figur 4: schaubildlich einen Stiel in einer ersten Variante,
- Figur 5: schaubildlich einen Stiel in einer zweiten Variante, und
- Figur 6: einen Stiel in einer dritten Variante.

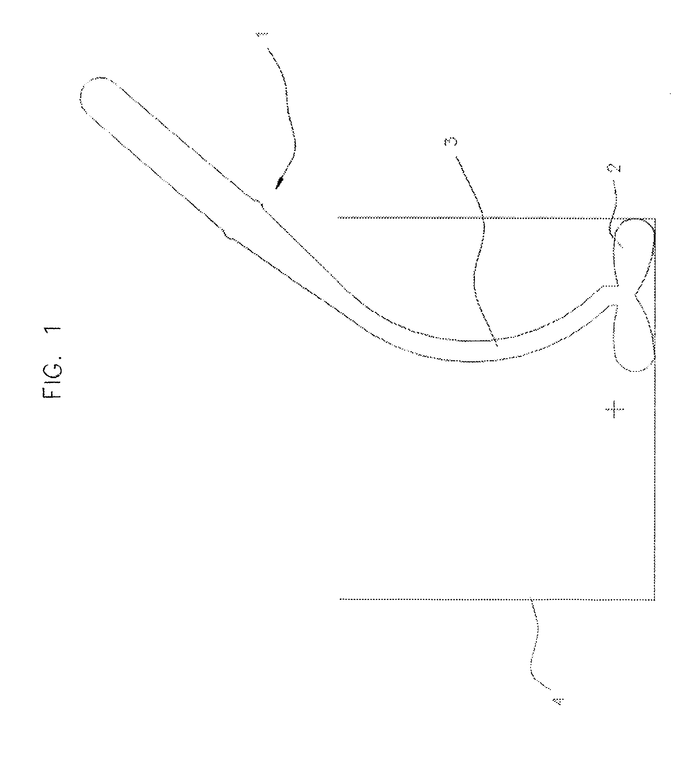

In Figur 1 ist insgesamt ein Küchenwerkzeug 1 angegeben, das durch ein Arbeitsorgan 2 und einem Stiel 3 gebildet ist. Das Werkzeug 1 ist in einem Topf 4 angeordnet.

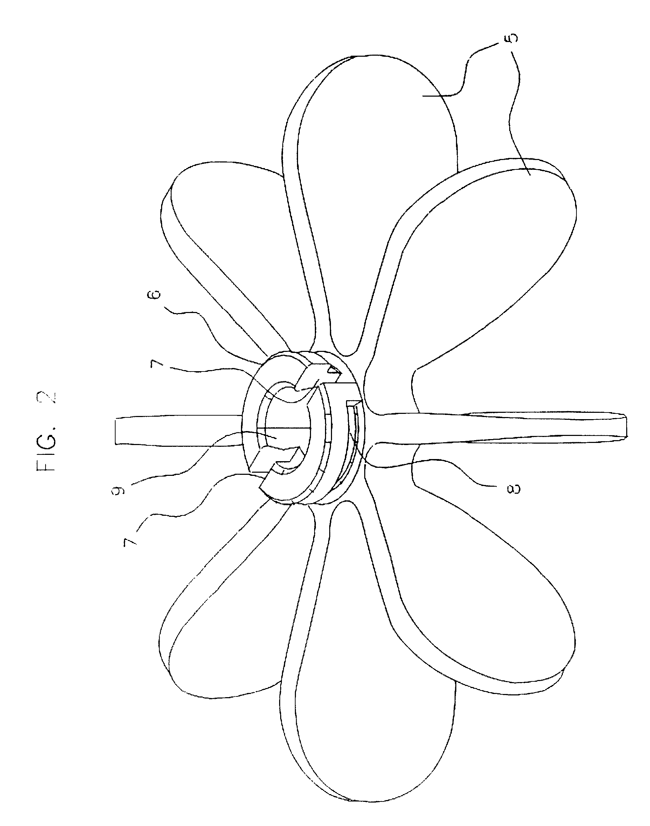

Wie in Figur 2 dargestellt, besteht das Arbeitsorgan 2 aus einer Vielzahl von Flügeln, im vorliegenden Fall acht, die sich von einem mittigen, nabenförmigen Körper 6 erstrecken.

Im nabenförmigen, axial über die Flügel 5 reichende Körper 6 sind diametral abgewandte Einschnitte 7 und an der zylindrischen Außenfläche des nabenartigen Körpers 6 sind Nuten 8 ausgearbeitet, die zur Achse des nabenartigen Körpers geneigt sind.

Im nabenartigen Körper 6 ist überdies eine halbkugelförmige Aufnahme 9 angebracht.

Die halbkugelförmige Aufnahme 9 ist dazu bestimmt, einen Kugelkopf 10 des Stieles 3 aufzunehmen. Der Kugelkopf 10 trägt zueinander koaxiale Bolzen 11, die in die Einschnitte 7 eingeführt werden können, um den Kugelkopf 10 in der halbkugelförmigen Aufnahme 9 zu lagern.

Auf dem Kugelkopf 10 ist eine Überwurfmutter 12 anbringbar, die oben einen radialen Ring 13 aufweist, durch den der Stiel 3 durchgeführt wird. Die Überwurfmutter weist an der Außenfläche Ansätze 14 auf, um zueinander diametral abgewandte Nasen 15 innerhalb der Überwurfmutter 12 in die Nut 8 zu bringen und die Überwurfmutter bajonettartig in der Nut 8 zu drehen.

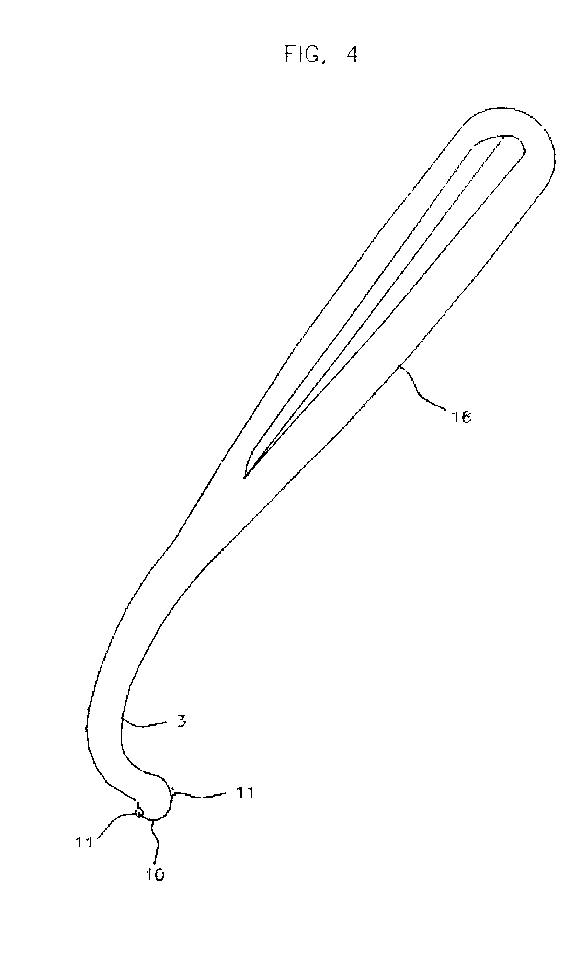

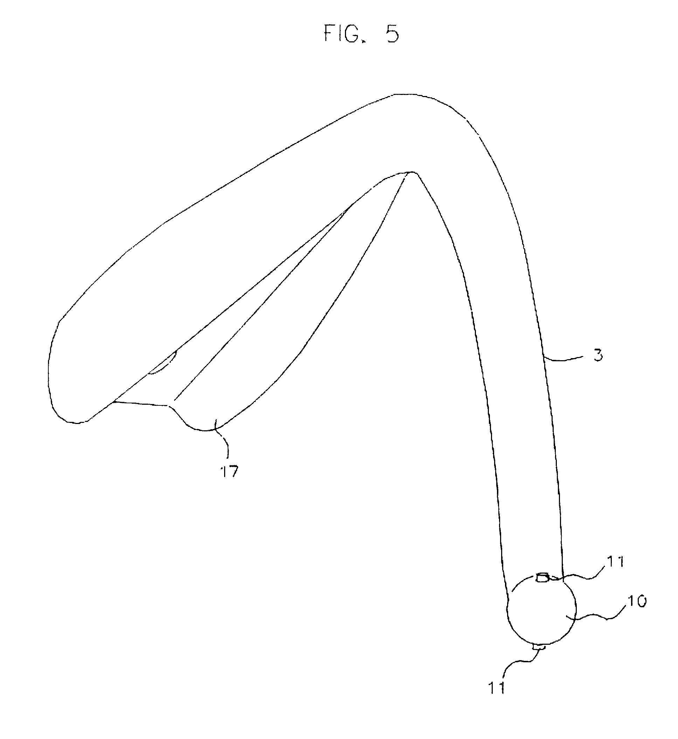

In Figur 4 ist gezeigt, wie der Stiel 3 einen Handgriff 16 aufweist, der erlaubt, das Arbeitsorgan 2 kurbelartig zu bewegen. Um die Kurbelwirkung bzw. den auf das Arbeitsorgan 2 wirkenden Hebelarm noch zu verstärken, kann der Stiel, wie in Figur 5 dargestellt, einen Handgriff aufweisen, der gegenüber der Drehachse des Arbeitsorgans 2 im wesentlichen rechtwinklig angeordnet ist.

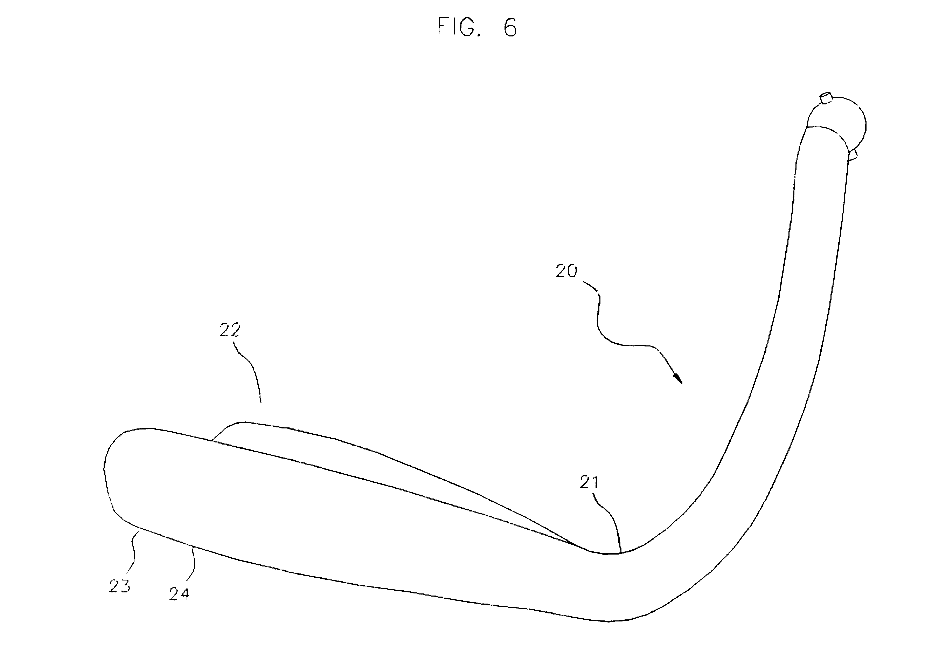

Die Variante aus Figur 6 sieht einen Stiel 20 vor, der ein Knie 21 aufweist. Von diesem Knie 21 laufen Leisten 23 und 24 auseinander, die zusammen mit den unteren, d.h. zur Innenkrümmung des Knies 21 äußeren Rändern zweckmäßiger Weise eine Auflage bilden, um das Küchenwerkzeug bequem mit angehobenem Arbeitsorgan auf der Arbeitsebene liegen zu lassen.

## Patentansprüche

1. Küchenwerkzeug zum Rühren, Schlagen und Loslösen, umfassend einen Stiel und ein mit dem Griff verbundenes Arbeitsorgan, dadurch gekennzeichnet, dass das Arbeitsorgan durch eine Vielzahl von Flügeln (5) gebildet ist, die sich radial von einer mittigen Nabe (6) erstrecken, die auf lösbare Art und Weise mit dem Verbindungsende des Stieles (3) verbunden ist.

2. Küchenwerkzeug nach Anspruch 1, dadurch gekennzeichnet, dass die Enden der Flügel abgerundet sind.

3. Küchenwerkzeug nach den vorstehenden Ansprüchen, dadurch gekennzeichnet, dass die Abrundung der Flügel (5) den Übergängen zwischen Wand und Boden eines Standardküchengefäßes, beispielsweise mit einem Radius von 5 mm entspricht.

4. Küchenwerkzeug nach den vorstehenden Ansprüchen, dadurch gekennzeichnet, dass zwischen Stiel (3) und Arbeitsorgan (5) eine lösbare, formschlüssige Verbindung vorgesehen ist.

5. Küchenwerkzeug nach den vorstehenden Ansprüchen, dadurch gekennzeichnet, dass die Verbindung zwischen Stiel (3) und Arbeitsorgan (5) durch einen Bajonettverschluss zwischen einem kugelförmigen Ende des Stieles und der Nabe gebildet ist.

6. Küchenwerkzeug nach den vorstehenden Ansprüchen, dadurch gekennzeichnet, dass der Stiel einen gegenüber der Drehachse des Arbeitsorgans hebelartigen Handgriff aufweist.

7. Küchenwerkzeug nach den vorstehenden Ansprüchen, dadurch gekennzeichnet, dass ausgehend von einer Stielkrümmung in Richtung des freien Endes des Handgriffes zur Bildung einer Auflagefläche Leisten derart auseinanderlaufen, dass das Küchenwerkzeug mit angehobenem Arbeitsorgan auf der Arbeitsebene in der Nähe der Kochfläche bequem liegengelassen werden kann.
